# EUROPEAN PATENT APPLICATION

(11) **EP 4 597 454 A1**
(43) Date of publication of application: **06.08.2025**
(21) Application number: 24217621.2
(22) Date of filing: 04.12.2024
(51) Int. Cl.: G06V 20/52, G06V 10/82

(54) **POINT-OF-SALE SYSTEM, SERVER, AND STORAGE MEDIUM**

(30) Priority: 01.02.2024 JP 2024014108
(71) Applicant: Toshiba TEC Kabushiki Kaisha, Tokyo 141-8562 (JP)
(72) Inventor: Nodera, Nobutomo, Tokyo, 141-8562 (JP)
(74) Representative: Bandpay & Greuter

(57) **Abstract**

A point-of-sale system installed in a store includes a camera installed in the store, a terminal operated by a store clerk in the store, and a server including a network interface and a processor configured to: acquire an image captured by the camera, input the image to a computer model and generate using the computer model in response to the input of the acquired image first text data indicating one of a facial expression, an appearance, and an action of a customer in the image, determine whether the customer in the image is engaging in a suspicious activity based on the first text data, upon determining that the customer is engaging in a suspicious activity, generate a warning message indicating said one of the facial expression, the appearance, and the action of the customer, and control the network interface to transmit the generated warning message to the terminal.

## Description

### FIELD

Embodiments described herein relate generally to a point-of-sale (POS) system, a server, and a storage medium.

### BACKGROUND

Conventionally, there have been an increasing number of self-service sales data processing apparatuses and systems that enable a consumer to purchase an item by himself or herself without involving an employee by using a dedicated self-service POS terminal, a smartphone, a cart POS, or the like. It is known that, with the increase in such self-service checkout methods, there is a high possibility that shoplifting is increasing. Shoplifting can lead to item losses, which is a big problem particularly for small stores.

Incidentally, in recent years, with the development of techniques such as Artificial Intelligence (AI), it has become possible to identify people's facial expressions, gestures, behaviors, and the like. It would be useful to detect, in a public place such as a grocery store, a person who is likely to commit a harmful act such as shoplifting or a dangerous act using AI techniques so that such a harmful act can be reported to a responsible person or the like in advance in an easy-to-understand manner.

### SUMMARY OF THE INVENTION

To this end, a point-of-sale (POS) system, a server and a non-transitory computer readable storage medium according to appended claims are provided.

Embodiments of the present invention provide a POS system, a server, and a storage medium for accurately detecting a customer who is likely to engage in a suspicious activity in a store and notifying a store clerk in an easy-to-understand manner.

In one embodiment, a POS system installed in a store, comprises: a camera installed in the store; a terminal operated by a store clerk in the store; and a server for managing the camera and the terminal. The server includes: a network interface connectable to the camera and the terminal, and a processor configured to: acquire an image captured by the camera, input the acquired image to a computer model and generate using the computer model in response to the input of the acquired image first text data indicating at least one of a facial expression, an appearance, and an action of a customer shown in the image, wherein the computer model has been trained using: images each showing a customer, and text data indicating at least one of a facial expression, an appearance, and an action of the customer, determine whether the customer shown in the image is engaging in a suspicious activity based on the first text data, upon determining that the customer is engaging in a suspicious activity, generate a warning message indicating said one of the facial expression, the appearance, and the action of the customer, and control the network interface to transmit the generated warning message to the terminal. The terminal is configured to output the warning message upon receipt thereof.

### BRIEF DESCRIPTION OF THE DRAWINGS

FIG. 1 is a schematic diagram of an information processing system according to an embodiment.
FIG. 2 is a diagram illustrating a hardware configuration of a store computer (SC) according to an embodiment.
FIG. 3 is a diagram illustrating an exemplary functional configuration of the SC.
FIG. 4 is a diagram illustrating an exemplary training process executed by the SC.
FIG. 5 is a flowchart illustrating an exemplary process executed by the SC.
FIG. 6 is a flowchart illustrating an exemplary process executed by the SC.

### DETAILED DESCRIPTION

Hereinafter, embodiments will be described in detail with reference to the drawings. The present invention is not limited to the embodiments described below.

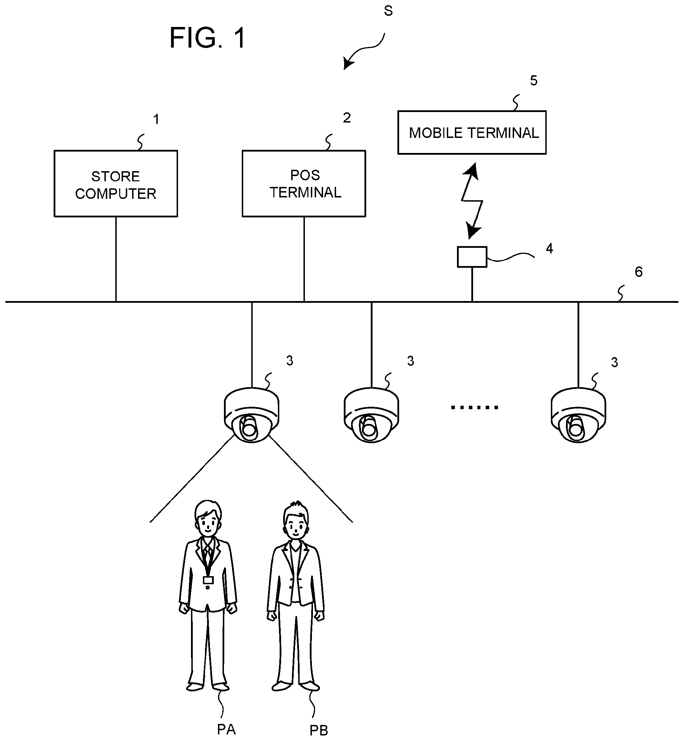

Hereinafter, an information processing apparatus, an information processing system, and a program according to an embodiment will be described in detail with reference to FIGS. 1 to 6. In embodiments described below, a SC installed in a facility such as a department store or a supermarket is described as an example of a training device or an information processing apparatus, but the present disclosure is not limited by the embodiments.

FIG. 1 is a schematic diagram of an information processing system S such as a POS system according to an embodiment. In FIG. 1, the device includes a SC 1, a POS terminal 2, a plurality of cameras 3, and a mobile terminal 5.

The SC 1, the POS terminal 2, and the plurality of cameras 3 are connected to each other via a communication line 6 such as a local area network (LAN), for example. Further, the mobile terminal 5 is connected to the SC 1 via an access point 4, which is a relay device for wireless communication, and the communication line 6.

The number of devices illustrated in FIG. 1 is an example. For example, the system S may include a plurality of POS terminals 2, a plurality of access points 4, and/or a plurality of mobile terminals 5.

The POS terminal 2 is a sales data processing apparatus that executes a sales registration process for an item purchased at a store. For example, the POS terminal 2 is a self-service POS terminal, a smartphone, a cart POS, or the like. Note that the POS terminal 2 is not limited to a self-service device. For example, the POS terminal 2 may be a conventional POS device for a store clerk to perform a sales registration process.

The POS terminal 2 generates item sales registration data and transmits the item sales registration data to the SC 1 via the communication line 6. In addition, the POS terminal 2 receives a warning message, which will be described later, from the SC 1.

The SC 1 is a store server that collects and manages item sales registration data received from the POS terminal 2. The SC 1 may be constituted by one server device or by a plurality of server devices. The SC 1 may be a cloud server. The SC 1 may be provided in a network outside the store.

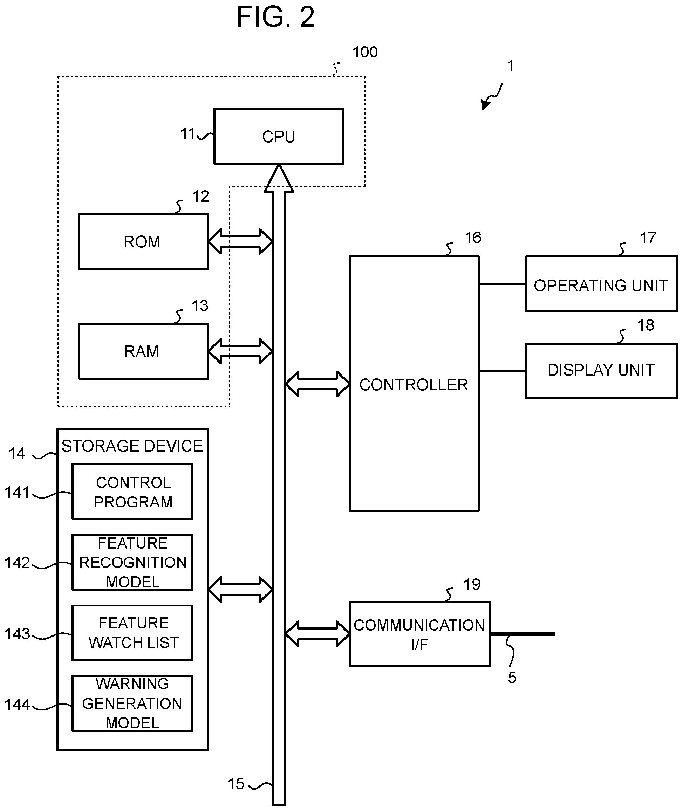

The SC 1 stores item information such as a price and an item name of an item to be sold at a store. Further, the SC 1 inputs the image captured by the camera 3 into a feature recognition model 142 (see FIG. 2), and detects a person predicted to be involved in a harmful act such as shoplifting, pickpocket, or violent act as a person of interest based on the text describing the feature of the person output from the feature recognition model 142.

In addition, when a person of interest is detected, the SC 1 generates a warning message for notifying a store clerk of the fact that the person of interest is detected. The SC 1 transmits the generated warning message to the POS terminal 2 and the mobile terminal 5.

The camera 3 captures an image of a person in the store. For example, a plurality of cameras 3 are installed along a passage at regular intervals on a ceiling or the like in the vicinity of the passage so that a person passing through the inside of the store can be imaged.

As an example, the plurality of installed cameras 3 capture an image of a passage path from when a person comes to the store to when the person leaves the store. In the exemplary embodiment of FIG. 1, the cameras 3 are installed along a passage path in the store, and a person PA and a person PB are captured by these cameras 3. The image captured by the camera 3 includes information indicating a capture time and a capture location (for example, the location of the camera 3 that captures the image).

The mobile terminal 5 is carried by a store clerk and exchanges various types of data with SC 1. The mobile terminal 5 is, for example, a smartphone, a tablet terminal, or the like. For example, the mobile terminal 5 receives a warning message from SC 1.

Next, the hardware configuration of SC 1 will be described. FIG. 2 is a diagram illustrating a hardware configuration of the SC 1 according to an embodiment.

As shown in FIG. 2, the SC 1 includes a central processing unit (CPU) or processor 11, a read only memory (ROM) 12 for storing various programs, a random access memory (RAM) 13 for expanding various data, a storage device 14 for storing various programs, and the like.

The CPU 11, the ROM 12, the RAM 13, the storage device 14 are connected to each other via a data bus 15. The CPU 11, the ROM 12, and the RAM 13 constitute a control unit 100. That is, the control unit 100 or the CPU 11 executes various processes in accordance with a control program 141 stored in the ROM 12 or the storage device 14 and loaded onto the RAM 13. Various processes will be described later.

The RAM 13 expands various programs including the control program 141, and temporarily stores images captured by the camera 3 until the images are stored in the storage device 14.

The storage device 14 is a non-volatile memory such as a hard disc drive (HDD) or a flash memory that retains stored data even when the power is turned off, and stores a program or the like including the control program 141. The storage device 14 includes a feature recognition model 142, a feature watch list 143, and a warning generation model 144.

The feature recognition model 142 is a computer model that has been trained using input training data including an image including a person and a text describing an action of the person. The training process of the feature recognition model 142 will be described later.

As an example, the feature recognition model 142 is a computer model based on a machine learning model such as a neural network whose parameters are determined by Deep Learning. For example, Convolutional Neural Network (CNN) is available, but other networks may be used.

In the present embodiment, the feature recognition model 142 has a function of outputting feature text data describing a feature (for example, an expression, an appearance, an action, or the like) of the person, in response to an input of an image including the person captured by the camera 3.

The feature watch list 143 is a list in which keywords indicating the features of the person of interest related to the harmful act are registered. The person of interest includes those who are expected to commit harmful acts in the future and those who have already committed harmful acts. For example, a keyword indicating a feature of a person of interest is a character string related to a facial expression, a behavior, an action pattern, or the like that may suggest a harmful action.

When a keyword registered in the feature watch list 143 is present in the feature text data output by the feature recognition model 142, the SC 1 detects a person included in the inputted image as the person of interest.

For example, it is known that an action of hiding an item, an unnatural action, a sudden change of direction, or the like is an action suggesting shoplifting. Therefore, by registering a character string related to such an action as a keyword in the feature watch list 143, the SC 1 can detect not only the person who actually commits shoplifting but also the person who is likely to commit shoplifting as the person of interest.

The warning generation model 144 is a generative AI that generates a sentence, and is, for example, a large language models (LLM). The warning generation model 144 generates warning text data including the features of the person detected as the person of interest.

For example, the warning generation model 144 generates warning text data that notifies the store clerk of the presence of the person in response to input of text data including feature text data of the person detected as the person of interest, which is constructed by a known deep learning technique.

An operating unit 17 and a display unit 18 are connected to the data bus 15 via a controller 16.

The operating unit 17 receives various inputs from an operator such as a store clerk. For example, the operating unit 17 includes a numeric keypad, various function keys, and the like for placing numbers.

The display unit 18 displays various types of information. For example, the display unit 18 displays the generated warning message. The display unit 18 may display an in-store image input from the camera 3. Further, the display unit 18 may display an image captured by a specific camera 3. Further, the display unit 18 may display the images captured by the plurality of cameras 3 on the same screen at once by dividing the screen.

The data bus 15 is connected to a communication I/F 19 such as a LAN interface (I/F). The communication I/F 19 is connected to the communication line 6.

The communication I/F 19 is a network interface circuit that transmits and receives various types of data. For example, the communication I/F 19 receives images captured by the cameras 3 in real time.

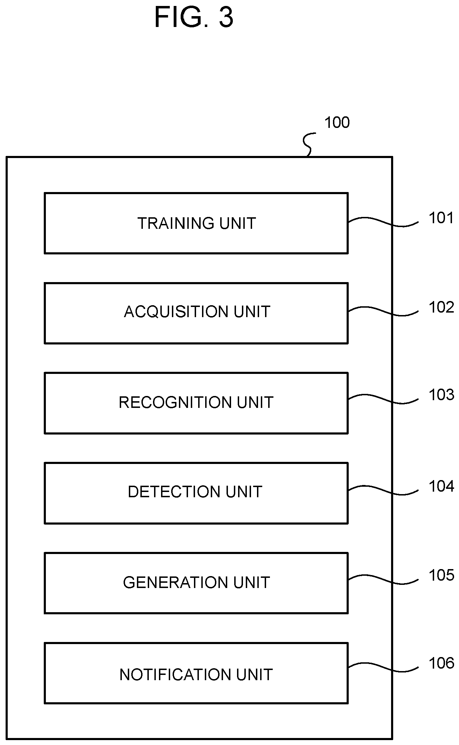

Next, the functional configuration of the SC 1 will be described. FIG. 3 is a functional diagram illustrating a functional configuration of the SC 1 according to one embodiment. The control unit 100 performs the functions of a training unit 101, an acquisition unit 102, a recognition unit 103, a detection unit 104, a generation unit 105, and a notification unit 106 according to various programs including the control program 141 stored in a ROM 12 or the storage device 14.

The training unit 101 causes the feature recognition model 142 to learn the features of the person, such as the facial expression, appearance, and behavior of the person included in the image. For example, the training unit 101 collects images showing a person and texts describing a facial expression and an action feature of the person in the image. Then, the training unit 101 generates input training data including the collected images and the texts.

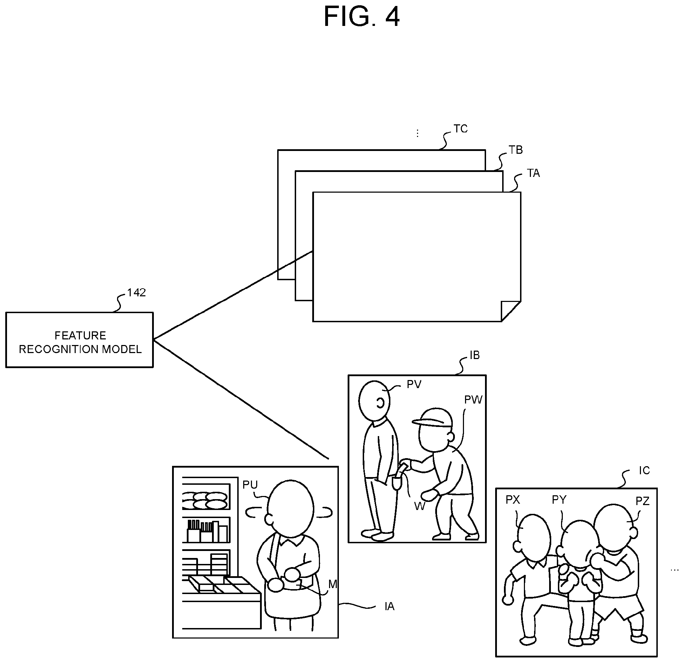

Further, the training unit 101 generates a set of the generated input training data and the feature text data describing the features of the person included in the image of the input training data as a training data set. The training unit 101 causes the feature recognition model 142 to learn the features of the person included in the image using the generated training data set. An example of the learning process will be described below with reference to FIG. 4.

FIG. 4 is a diagram illustrating a learning process. First, the training unit 101 collects images IA, IB, IC... showing a person. Further, the training unit 101 collects texts TA, TB, TC... describing the action of the person included in each of the images IA, IB, IC....

In the exemplary embodiment of FIG. 4, the image IA is an image including a person PU for shoplifting. Further, the text TA corresponding to the image IA is text data describing shoplifting of the item M by the person PU. The training unit 101 generates data in which the images IA and the text TA are associated with each other as the first input training data.

Further, the training unit 101 sets feature text data (for example, "stiff facial expression, a man in his 50's of medium height and build, black pants and shirt, a shoplifting action", and the like) describing the facial expression, appearance, behavior, and the like of the person PU included in the image IA as the first output training data. The training unit 101 generates a set of the output training data and the generated input training data as a first training data set.

Similarly, the image IB is an image showing a person PW who pickpockets. Further, the text TB corresponding to the image IB is text data describing an act of stealing or pickpocketing the wallet W from the other person PV by the person PW. The training unit 101 generates data in which the images IB and the text TB are associated with each other as the second input training data.

Further, the training unit 101 sets feature text data describing the facial expression, appearance, behavior, and the like of the person PW included in the image IB (for example, "a skinny and medium height man in his 40's, smiling, blue jacket and black pants, a shoplifting action, and the like") as the second output training data. The training unit 101 generates a pair of the output training data and the generated input training data as a second training data set.

Similarly, the image IC is an image showing persons PX and a PZ who perform a threatening action. In addition, the text TC corresponding to the image IC is text data describing a threat to the other person PY by the person PX and PZ. The training unit 101 generates data in which the images IC and the text TC are associated with each other as the third input training data.

Further, the training unit 101 sets, as the third output training data, feature text data describing the facial expression, appearance, behavior, and the like of the person PZ included in the image IC (for example, "a skinny, medium height man in his 10's, a sneer on his face, white polo shirt and dark blue pants, a threatening behavior", and the like, and feature text data describing the facial expression, appearance, behavior, and the like of the person PZ (for example, "A tall, slightly overweight tall man in his 20's with a sneer on his face, a red T-shirt and dark red shorts, threatening behavior", etc.)

The training unit 101 generates a set of the output training data and the generated input training data as a third training data set. Then, the training unit 101 causes the feature recognition model 142 to learn the features of the person included in the image using the training data sets generated as described above.

The process executed by the training unit 101 may be executed by an external device other than the SC 1 such as an external server. In this case, the SC 1 stores the feature recognition model 142 trained by the external server or the like in the storage device 14.

The acquisition unit 102 acquires an image showing a person.

For example, the acquisition unit 102 acquires images from the cameras 3 in real time via the communication I/F 19 and the communication line 6. In addition, the acquisition unit 102 acquires an image showing a person who is recognized by a known image recognition technique. As an example, in FIG. 1, the acquisition unit 102 acquires an image including the person PA captured by the camera 3 and an image including the person PB. Further, the acquisition unit 102 inputs an image including the imaged person to the recognition unit 103.

The recognition unit 103 recognizes a feature of a person included in the image acquired by the acquisition unit 102.

For example, the recognition unit 103 inputs the image input from the acquisition unit 102 to the feature recognition model 142. Then, the recognition unit 103 inputs the feature text data output from the feature recognition model 142 to the detection unit 104, which will be described later, as the recognition result of the feature of the person shown in the image with respect to the input of the image. At this time, the recognition unit 103 also inputs, to the detection unit 104, information indicating the image taking location of the image related to the recognition result.

For example, it is assumed that the person PA in FIG. 1 is a tall 20's man of medium build and wears a dark blue suit, and an image of performing a sudden change of direction in front of an item shelf with a stiff expression is acquired by the acquisition unit 102. In this case, the feature recognition model 142 outputs, to the input of the image, text data such as "a tall 20's man with a stiff facial expression, a dark blue suit, and a sudden change of direction in front of the item shelf".

The recognition unit 103 inputs, to the detection unit 104, a recognition result (i.e., feature text data) indicating that the feature of the person PA is "a tall 20's man of medium build with a stiff facial expression, a dark blue suit, and made a sudden change of direction in front of the item shelf" together with information indicating an image taking location of the images related to the recognition result.

The detection unit 104 detects a person of interest based on the recognition result by the recognition unit 103.

For example, the detection unit 104 refers to the feature watch list 143 and determines whether a keyword registered in the feature watch list 143 exists in the feature text data sent as the recognition result from the recognition unit 103. When a keyword is present, the detection unit 104 detects a person included in an image related to the recognition result as a person of interest.

As an example, it is assumed that the feature of the recognized person PA is "a tall 20's man of medium build with a stiff facial expression, a dark blue suit, and made a sudden change of direction in front of the item shelf", and the "sudden change of direction" is included in the feature watch list 143. In this situation, the detection unit 104 detects the person PA as a person of interest.

The detection unit 104 inputs, to the generation unit 105, information indicating that a person of interest has been detected, feature text data of the person detected as the person of interest, and information indicating an image taking location of an image related to a recognition result sent from the recognition unit 103.

The detection unit 104 may determine whether the feature text data includes a character string related to a keyword registered in the feature watch list 143, using a known natural language processing technique or the like. When the character string related to the keyword is included, the detection unit 104 detects a person included in the image related to the recognition result as a person of interest.

The generation unit 105 generates a warning message for notifying the store clerk that a person of interest has been detected.

For example, when a person of interest is detected by the detection unit 104, the generation unit 105 inputs, to the warning generation model 144, the feature text data of the person and the text data obtained by texturizing the information indicating the image taking location of the image related to the recognition result, which are output from the detection unit 104. The generation unit 105 generates warning text data output from the warning generation model 144 as a warning message. The generation unit 105 inputs the generated warning message to the notification unit 106.

As an example, it is assumed that the person PA is detected as a person of interest, the feature of the person PA is "a tall 20's man of medium build with a stiff facial expression, a dark blue suit, and made a sudden change of direction in front of the item shelf", and the image taking location of the images related to the recognition of the feature of the person PA is in front of the first item shelf.

In this case, the warning generation model 144 outputs warning text data such as " a tall 20's man of medium build with a stiff facial expression wearing a dark blue suit near the first item shelf is taking a suspicious action of sudden change of direction in front of the item shelf. Please note that the person may shoplift." The generation unit 105 generates the warning text data as a warning message.

As described above, by generating the warning message including the information on the position at which the person of interest is imaged, the store clerk can easily grasp the location of the person of interest.

Note that the generation unit 105 may control the warning message output from the model by the content instructed by the instruction information by inputting the text data and the instruction information to the warning generation model 144.

For example, the instruction information is information instructing to specify the output order of each element included in the text data (for example, explain in the order of the location and the features of the person), or to summarize and output the contents of the text data. In this case, the warning generation model 144 generates a warning message corresponding to the content of the instruction information.

The template for generating the instruction information is stored in advance in the storage device 14 or the like. Note that a plurality of templates may be stored in the storage device 14 or the like. In this case, the generation unit 105 may selectively use a plurality of templates according to the situation. For example, the generation unit 105 may switch the template according to the keyword of the person of interest.

Here, it is assumed that the above-described process of detecting a person of interest by the detection unit 104 is executed after the above-described process of recognizing the features of the person included in the image acquired by the acquisition unit 102 by the recognition unit 103 and before the above-described process of generating a warning message by the generation unit 105.

The notification unit 106 performs a notification that the person of interest is detected by the store clerk of the store.

For example, the notification unit 106 causes the display unit 18 to display the warning message input from the generation unit 105. Further, for example, the notification unit 106 controls the communication I/F 19 to transmit the warning message input from the generation unit 105 to the POS terminal 2 via the communication line 6. Further, the notification unit 106 controls the communication I/F 19 to transmit a warning message to the mobile terminal 5 via the communication line 6, and the access point 4. Further, the notification unit 106, the POS terminal 2, or the mobile terminal 5 may convert the warning message into a voice and output the voice via a speaker, for example.

For example, the POS terminal 2 displays the received warning message on a display for a store clerk provided in the POS terminal 2 to notify a store clerk who is present in the vicinity of the POS terminal 2 of a warning indicating that a person of interest has been detected.

Further, for example, the mobile terminal 5 displays the received warning message on a display provided in the mobile terminal 5, thereby notifying a store clerk who is present at a location other than the vicinity of the POS terminal 2, such as a backyard, of a warning indicating that a person of interest has been detected.

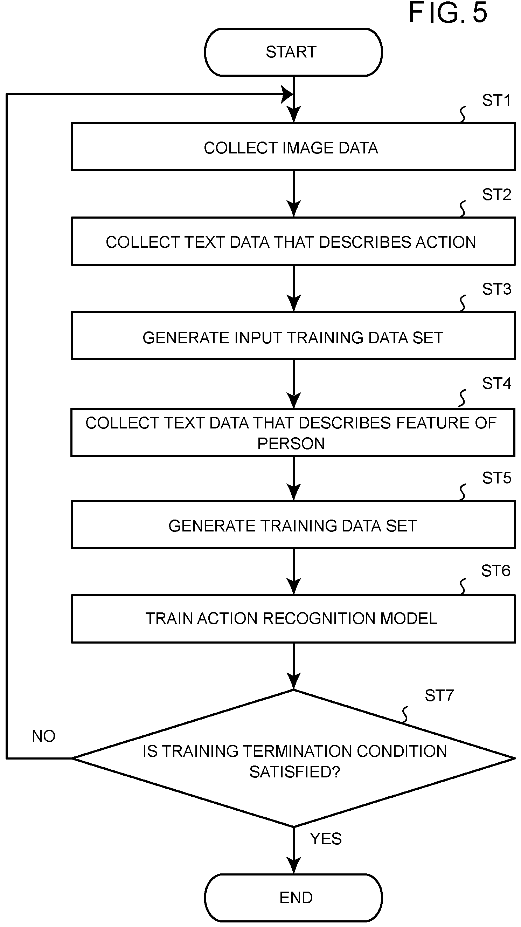

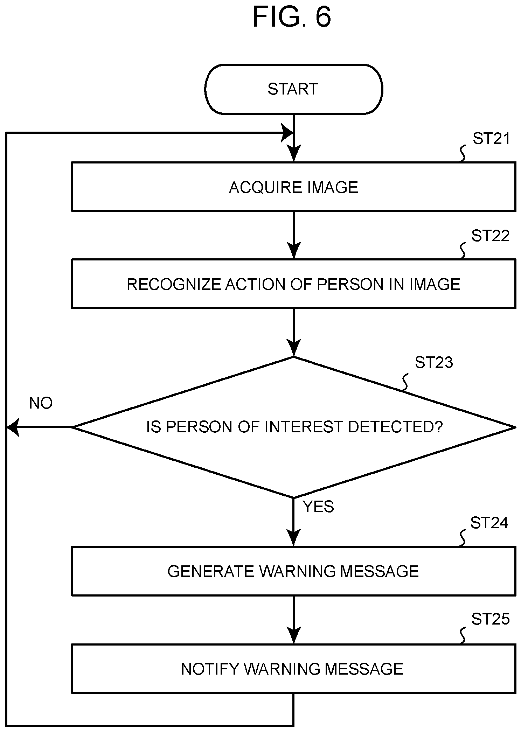

Next, a process executed by the SC 1 will be described with reference to FIG. 5 and FIG. 6. FIG. 5 and FIG. 6 are flow charts illustrating exemplary processes executed by the SC 1. First, the learning process will be described. FIG. 5 illustrates an exemplary flow of a training process executed by the SC 1.

First, the training unit 101 collects images showing a person (step ST1). The image to be collected may be an image captured by a plurality of cameras 3 in the store or an image captured by a camera provided outside the store.

Next, the training unit 101 collects text data describing the action being performed by the person in the acquired images (step ST2). For example, the training unit 101 receives, from the operator via the operating unit 17, text representing an action being performed by the person in the images collected in the step ST1. The training unit 101 collects the received text as text data.

Note that, in a case where an image showing a person and text describing the action of the person in the image are published on a website, free paper, or the like, the training unit 101 may collect a set of the image and the text.

Next, the training unit 101 generates input training data (step ST3). For example, the training unit 101 generates data in which images collected in the step ST1 and text data collected in ST2 are associated with each other as input training data.

Next, the training unit 101 collects feature text data (i.e., output training data) describing the features of the person in the images corresponding to the generated input training data (step ST4). For example, the training unit 101 receives, from the operator via the operating unit 17, a text entry describing the facial expression, appearance, behavior, and the like of a person in the images collected in the step ST1. The training unit 101 collects the received text as feature text data.

Next, the training unit 101 generates a training data set (step ST5). For example, the training unit 101 generates a set of the input training data generated in the step ST3 and the output training data collected in the step ST5 as a training data set.

Next, the training unit 101 trains the feature recognition model 142 (step ST6). For example, the training unit 101 causes the feature recognition model 142 to learn the features of the person included in the images using the training data set generated in the step ST5.

Next, the training unit 101 determines whether a training termination condition is satisfied (step ST7). For example, the training unit 101 determines that the training termination condition is satisfied when the number of training data sets in which the training process is executed exceeds a threshold value. If the termination condition is not satisfied (step ST7, No), the process returns to step ST1. On the other hand, if the termination condition is satisfied (ST7, Yes), this process is terminated.

Next, detection and notification processing will be described. In the present embodiment, it is assumed that the detection/notification process is a series of processes related to detection of a person of interest and notification to that effect. FIG. 6 illustrates an exemplary flow of a detection/notification process executed by the SC 1.

First, the acquisition unit 102 acquires images showing a person (step ST21). For example, the acquisition unit 102 receives images captured by a plurality of cameras 3 in real time from via the communication I/F 19 and the communication line 6. The acquisition unit 102 acquires an image of a person who is recognized by a known image recognition technique. The acquisition unit 102 inputs the acquired image to the recognition unit 103.

Next, the recognition unit 103 recognizes the features of the person in the image based on the acquired image (step ST22).

For example, the recognition unit 103 inputs the image input from the acquisition unit 102 to the feature recognition model 142. The recognition unit 103 input the feature text data output from the feature recognition model 142 to the detection unit 104 as a recognition result. At this time, the recognition unit 103 also inputs the information indicating the image taking location of the image acquired in step ST21 to the detection unit 104 together with the recognition result.

Next, the detection unit 104 determines whether a person of interest has been detected (step ST23). For example, the detection unit 104 refers to the feature watch list 143, and determines that a person of interest is detected when a keyword registered in the feature watch list 143 exists in the feature text data sent as the recognition result from the recognition unit 103. If no person of interest is detected (step ST23, No), the process returns to step ST21.

On the other hand, when a person of interest is detected (step ST23, No), the detection unit 104 inputs the feature text data sent to the detection unit 104 and the information indicating the image taking location to the generation unit 105 after the step ST22.

Next, the generation unit 105 generates a warning message (step ST24).

For example, after step ST23, the generation unit 105 inputs, to the warning generation model 144, the feature text data sent from the detection unit 104 and the text data obtained by converting the information representing the image taking location into text. The generation unit 105 generates the warning text data output from the warning generation model 144 as a warning message. The generation unit 105 inputs the generated warning message to the notification unit 106.

Next, the notification unit 106 notifies the store clerk of a warning indicating that a person of interest has been detected (step ST25).

For example, the notification unit 106 causes the display unit 18 to display the warning message sent from the generation unit 105 after step S24. Further, for example, the notification unit 106 controls the communication I/F 19 to transmit a warning message to the POS terminal 2 via the communication line 6. Further, the notification unit 106 controls the communication I/F 19 to transmit a warning message to the mobile terminal 5 via the communication line 6 and the access point 4.

Thereafter, the process returns to step ST21, and the same process is repeated.

As described above, The SC 1 causes the feature recognition model 142 to learn the feature text data describing the feature of the person from the image based on the training data set including the image including the person and the text data describing the feature of the person. Further, the SC 1 detects a person who is likely to commit a harmful act such as shoplifting, or a person of interest who has committed a harmful act on the basis of the feature text data derived by inputting an image captured by the camera 3 provided in the store to the feature recognition model 142. Further, the SC 1 causes the warning generation model 144 to learn to derive warning text data describing that a person of interest is detected from the feature text data when the person of interest is detected. Then, the SC 1 generates a warning message based on the warning text data derived by inputting the feature text data of the person of interest, and notifies the store clerk of the warning message.

By recognizing the features of the person included in the image using the feature recognition model 142 learned in the training data set including the image including the person and the text data describing the features of the person, the SC 1 can derive the features of the person existing in the store with high accuracy. Then, the SC 1 can detect a person of interest related to a harmful act when the feature of the derived person is related to a harmful act such as shoplifting. Therefore, the person of interest can be easily and accurately detected only by acquiring the images captured by the camera 3. In addition, the SC 1 generates a warning message for notifying the store clerk of the warning indicating that the person of interest has been detected, using the warning generation model 124 which is an LLM, from the feature text data describing the feature of the detected person of interest. Therefore, the SC 1 can notify the store clerk that a person of interest has been detected in an easy-to-understand manner.

Note that the above-described embodiments can be modified and implemented as appropriate by changing a part of the configuration or function of the SC 1. Therefore, in the following, some modifications according to the above-described embodiments will be described as other embodiments. Note that, in the following, differences from the above-described embodiments will be mainly described, and detailed descriptions of the same points as those described above will be omitted. Further, the modification examples described below may be implemented individually or in combination as appropriate.

### (Variation 1)

In the above-described embodiments, the detection unit 104 detects a person of interest based on the feature text data output from the feature recognition model 142 and the feature watch list 143. In this modification, a person of interest is detected without using the feature watch list 143.

In this modification, the feature recognition model 142 outputs only feature text data describing the features of a person involved in a detrimental action. That is, when the person in the image performs an action not related to the harmful action, the feature recognition model 142 does not output the feature text data.

Therefore, in this modification, when the feature text data is output from the feature recognition model 142, the detection unit 104 detects a person in the image corresponding to the output feature text data as a person of interest.

In this modification, the detection unit 104 does not need to compare the keyword registered in the feature watch list 143 with the character string included in the output feature text data. That is, according to this modification, the processing load of the control unit 100 can be reduced.

### (Variation 2)

In Modification 1 described above, the detection unit 104 detects a person of interest based on the output of the feature recognition model 142 has been described. In the present modification, a person of interest is detected using a determination model for determining whether the person in the image is a person of interest.

In the present modification, the determination model is stored in the storage device 14. For example, the determination model is configured by a CNN or the like. The determination model is a computer model in which feature text data is used as input training data, and information indicating whether a person related to the feature text data is a person of interest is learned as output training data (i.e., correct answer data).

For example, the determination model outputs, to the input of the feature text data output by the feature recognition model 142, information indicating whether a person included in the acquired image is a person of interest.

In the present modification, when the determination model outputs information indicating that the person included in the acquired image is a person of interest, the detection unit 104 detects the person in the acquired image as the person of interest.

According to the present modification, when the feature watch list 143 is used, the processing time can be expected to be shortened in a case where it is predicted that the number of keywords to be registered becomes an enormous number.

Further, in Modification 1, since the presence or absence of the output of the feature text data determines whether the person in the image is a person of interest, there is a possibility that the determination is difficult or erroneously determined in a case where the processing involving the feature recognition model 142 is delayed for some reason or the like. On the other hand, in the present modification example, since the determination model outputs information indicating whether the person is a person of interest, erroneous determination caused by a delay in processing does not occur.

### (Variation 3)

In the above-described embodiments, the recognition unit 103 recognizes a feature of a person such as an expression, an appearance, and an action of a person in an image using one feature recognition model 142. In the present modification, a plurality of models are used to recognize features of a person such as an expression, an appearance, and an action of a person in an image.

In this modification example, three models, a facial expression recognition model, an appearance recognition model, and an action recognition model, have the same functions as those of the feature recognition model 142.

The facial expression recognition model is composed of a CNN or the like. The facial expression recognition model is a computer model trained by a training data set including an image including a person and text data describing the facial expression of the person. The facial expression recognition model outputs text data describing a facial expression of a person to an input of an image including the person.

CNN and the like constitute the appearance recognition-model. The appearance recognition model is a computer model trained by a training data set including an image including a person and text data describing an appearance feature of the person. The appearance recognition model outputs text data describing an appearance feature of a person for input of an image including the person.

The action recognition model is composed of CNN and so on. The action recognition model is a computer model trained by a training data set including an image including a person and text data describing the behavior of the person. The action recognition model outputs text data describing the behavior of a person to an input of an image including the person.

The recognition unit 103 according to the present modification inputs the images acquired by the acquisition unit 102 to the facial expression recognition model, the appearance recognition model, and the action recognition model, respectively. At this time, processing is executed in parallel in each of the facial expression recognition model, the appearance recognition model, and the action recognition model. Further, the recognition unit 103 integrates output results of each of the facial expression recognition model, the appearance recognition model, and the action recognition model, and recognizes features such as an expression, an appearance, and an action of a person in the image.

In the above example, the feature of the person in the image is recognized by the three models of the facial expression recognition model, the appearance recognition model, and the action recognition model, but other models may be added to recognize the feature of the person in the image. For example, a voice recognition model or the like that recognizes a voice uttered by a person in a moving image captured by the camera 3, which is trained by a known machine learning technique or a deep learning technique, may be used to recognize a feature of the person.

According to this modification, it is possible to recognize a feature of a person using a computer model trained for each type of feature, such as a feature of an expression, an appearance feature, and a feature of an action. As a result, it is possible to expect an improvement in the recognition accuracy of the feature for each type. Further, according to the present modification, in the learning process, it is possible to perform training processes in parallel using a plurality of training devices, and in this case, it is possible to expect an improvement in learning efficiency as compared with a case where a plurality of features are learned collectively by one training device.

The program(s) executed by the SC 1 of the above-described embodiments is recorded in a non-transitory computer-readable recording medium such as a CD-ROM, a flexible disk (FD), or a CD-R, a digital versatile disk (DVD) in an installable format or an executable format.

Further, the program(s) executed by the SC 1 of the above-described embodiments may be stored in a computer connected to a network such as the Internet, and may be downloaded through the network. Further, the program(s) executed by the SC 1 of the embodiments may be provided or distributed over a network such as the Internet.

Further, the program(s) executed by the SC 1 of the embodiments may be incorporated in the ROM 12 or the like in advance.

Further, various functional units such as the training unit 101, the acquisition unit 102, the recognition unit 103, the detection unit 104, the generation unit 105, and the notification unit 106 illustrated in FIG. 3 may be implemented by one or a plurality of process circuits such as an application specific integrated circuit (ASIC), a field programmable gate array (FPGA), and the like. In such a configuration, the processing circuit that functions as the detection unit 104 that detects a person of interest based on the second text information describing the features of the person is provided between the processing circuit that functions as the recognition unit 103 that derives the second text information and the processing circuit that functions as the generation unit 105 that generates the third text information including the features of the person of interest. According to such a configuration, it is possible to detect a person who is likely to commit a harmful act with high accuracy and to notify the person in an easy-to-understand manner.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirit of the disclosure.

## Claims

1. A point-of-sale (POS) system installed in a store, comprising:
a camera installed in the store;
a terminal operated by a store clerk in the store; and
a server for managing the camera and the terminal, the server including:
a network interface connectable to the camera and the terminal, and
a processor configured to:
acquire an image captured by the camera,
input the acquired image to a computer model and generate using the computer model in response to the input of the acquired image first text data indicating at least one of a facial expression, an appearance, and an action of a customer shown in the image, wherein the computer model has been trained using:
images each showing a customer, and
text data indicating at least one of a facial expression, an appearance, and an action of the customer,
determine whether the customer shown in the image is engaging in a suspicious activity based on the first text data,
upon determining that the customer is engaging in a suspicious activity, generate a warning message indicating said one of the facial expression, the appearance, and the action of the customer, and
control the network interface to transmit the generated warning message to the terminal, wherein
the terminal is configured to output the warning message upon receipt thereof.

2. The POS system according to claim 1, wherein
the server includes a memory that stores keywords related to the suspicious activity, and
the processor determines that the customer is engaging in the suspicious activity when the first text data includes one of the keywords.

3. The POS system according to claim 2, wherein
the keywords stored in the memory indicate actions that can be taken by customers in the store, and
the processor determines that the customer shown in the image is engaging in the suspicious activity when the first text data indicates one of the actions indicated by the stored keywords.

4. The POS system according to any one of claims 1 to 3, wherein the processor is configured to input the first text data to another computer model to generate the warning message.

5. The POS system according to claim 4, wherein said another computer model is a large language model that has been trained to generate a warning message for warning a store clerk of a suspicious activity by a customer in response to an input of one of a facial expression, an appearance, and an action of the customer that are associated with the suspicious activity.

6. The POS system according to claim 1, wherein
the camera is configured to include, in the image, location data indicating a location of the camera, and
the processor is configured to:
determine a location of the customer based on the location data included in the image,
generate second text data indicating the location of the customer, and
input the first and second text data to another computer model to generate the warning message.

7. The POS system according to any one of claims 1 to 6, wherein the terminal is configured to display a screen on which the warning message is displayed.

8. The POS system according to claim 7, wherein the terminal is a POS terminal for performing a checkout process.

9. The POS system according to claim 7, wherein the terminal is a mobile terminal carried by the store clerk in the store.

10. The POS system according to any one of claims 1 to 9, wherein the camera is installed along an aisle in the store.

11. A server for managing a camera installed in a store and a terminal operated by a store clerk in the store, the server comprising:
a network interface connectable to the camera and the terminal; and
a processor configured to:
acquire an image captured by the camera,
input the acquired image to a computer model and generate using the computer model in response to the input of the acquired image first text data indicating at least one of a facial expression, an appearance, and an action of a customer shown in the image, wherein the computer model has been trained using:
images each showing a customer, and
text data indicating at least one of a facial expression, an appearance, and an action of the customer,
determine whether the customer shown in the image is engaging in a suspicious activity based on the first text data,
upon determining that the customer is engaging in a suspicious activity, generate a warning message indicating said one of the facial expression, the appearance, and the action of the customer, and
control the network interface to transmit the generated warning message to the terminal, wherein
the warning message is output by the terminal upon receipt thereof.

12. The server according to claim 11, further comprising:
a memory that stores keywords related to the suspicious activity, and
the processor determines that the customer is engaging in the suspicious activity when the first text data includes one of the keywords.

13. The server according to claim 12, wherein
the keywords stored in the memory indicate actions that can be taken by customers in the store, and
the processor determines that the customer shown in the image is engaging in the suspicious activity when the first text data indicates one of the actions indicated by the stored keywords.

14. The server according to any one of claims 11 to 13, wherein the processor is configured to input the first text data to another computer model to generate the warning message.

15. A non-transitory computer readable storage medium that stores a program causing a computer for managing a camera installed in a store and a terminal operated by a store clerk in the store, to execute a method comprising:
acquiring an image captured by the camera;
inputting the acquired image to a computer model and generating using the computer model in response to the input of the acquired image first text data indicating at least one of a facial expression, an appearance, and an action of a customer shown in the image, wherein the computer model has been trained using:
images each showing a customer, and
text data indicating at least one of a facial expression, an appearance, and an action of the customer;
determining whether the customer shown in the image is engaging in a suspicious activity based on the first text data;
upon determining that the customer is engaging in a suspicious activity, generating a warning message indicating said one of the facial expression, the appearance, and the action of the customer; and
transmitting the generated warning message to the terminal, wherein
the warning message is output by the terminal upon receipt thereof.
